(19) Europäisches Patentamt
European Patent Office
Office européen des brevets

(11) **EP 0 767 709 B1**

(12) **EUROPÄISCHE PATENTSCHRIFT**

(45) Veröffentlichungstag und Bekanntmachung des Hinweises auf die Patenterteilung:
**02.11.2000 Patentblatt 2000/44**

(21) Anmeldenummer: **95922410.6**

(22) Anmeldetag: **23.06.1995**

(51) Int. Cl.$^7$: **B07C 5/342**

(86) Internationale Anmeldenummer:
**PCT/DE95/00818**

(87) Internationale Veröffentlichungsnummer:
**WO 96/00621 (11.01.1996 Gazette 1996/03)**

(54) **VORRICHTUNG ZUM ERKENNEN, SORTIEREN UND/ODER TRENNEN VERSCHIEDENER STOFFE BZW. GEGENSTÄNDE**

DEVICE FOR RECOGNISING, SORTING AND/OR SEPARATING DIFFERENT SUBSTANCES OR OBJECTS

DISPOSITIF PERMETTANT DE RECONNAITRE, DE TRIER ET/OU DE SEPARER DIFFERENTES SUBSTANCES OU OBJETS

(84) Benannte Vertragsstaaten:
**BE DE FR GB NL**

(30) Priorität: **29.06.1994 DE 4423770**

(43) Veröffentlichungstag der Anmeldung:
**16.04.1997 Patentblatt 1997/16**

(73) Patentinhaber:
**INSTITUT FUR CHEMO- UND BIOSENSORIK Münster E.V.
48149 Münster (DE)**

(72) Erfinder:
• **HUTH-FEHRE, Thomas**
  **D-48165 Münster (DE)**
• **FELDHOFF, Roger**
  **D-48145 Münster (DE)**
• **KANTIMM, Thomas**
  **D-48145 Münster (DE)**
• **KATERKAMP, Andreas**
  **D-48149 Münster (DE)**
• **QUICK, Ludger**
  **D-44534 Lünen (DE)**

(74) Vertreter:
**Pfenning, Meinig & Partner
Kurfürstendamm 170
10707 Berlin (DE)**

(56) Entgegenhaltungen:
**DE-A- 3 926 641     DE-A- 4 340 795
GB-A- 2 211 931     US-A- 3 981 590
US-A- 4 784 275**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zum Erkennen, Sortieren und/oder Trennen verschiedener Stoffe oder von Gegenständen aus verschiedenen Materialien nach dem Oberbegriff des Anspruchs 1. Eine solche Vorrichtung ist z.B. aus der US-A-3981590 bekannt. Dabei liegt eine bevorzugte Anwendung der erfindungsgemäße Vorrichtung darin, unsortiert anfallenden Abfall stoff- bzw. materialspezifisch zu sortieren und so für das Recycling geeignete Materialien sortenrein zur Verfügung zu stellen.

Durch die physikalischen Prozesse der Fluoreszenz, der Reflexion, der Transmission oder der Ramanstreuung läßt sich Information über die chemische und physikalische Beschaffenheit einer Probe gewinnen, ohne diese nennenswert zu beeinflussen. Um solchen spektroskopischen Analyseverfahren neue Einsatzfelder zu erschließen, werden zunehmend Lichtleiter eingesetzt. Sie erlauben es, Licht von schwer zugänglichen Stellen und aus unwirklichen Umgebungen, wie zum Beispiel chemischen Reaktoren, in die Spektralapparate einzukoppeln. Die verwendeten Lichtleiter bestehen meist aus Glas oder Quarzglas und haben Innendurchmesser von wenigen Mikrometern bis zu einigen Millimetern. Das von der Probe kommende Licht möglichst vollständig in diese dünnen Fasern einzukoppeln, ist von großer Wichtigkeit, da geringe Signalintensitäten im Spektralapparat sonst nur durch eine lange Meßzeit kompensiert werden können, was in vielen Anwendungen nicht möglich ist.

Ein Weg, die Signalintensität zu optimieren, besteht darin, den Abstand der Probe zur Eintrittsfläche des Lichtleiters zu minimieren. Im Extremfall, der bei kommerziellen Nahinfrarot-Analysesystemen häufig angewendet wird, wird das Lichtleiterende in direkten Kontakt mit der Probe gebracht, d.h. bei pulverförmigen oder flüssigen Proben in diese eingetaucht. Dies ist allerdings in vielen Fällen nicht möglich, wie zum Beispiel bei chemisch aggressiven oder heißen Proben oder bei nur durch Fenster beobachtbaren oder schnell bewegten Proben.

Wird der Lichtleiter von der Probe entfernt, so hat die Eintrittsfläche des Lichtleiters einen immer kleineren Anteil an dem Raumwinkel, in den die Probe das Licht ausstrahlt, und die Strahlungsintensität im Lichtleiter sinkt mit dem Quadrat des Abstands. Dieser Effekt kann dadurch abgemildert werden, daß eine Abbildungsoptik mit einer größeren Eintrittsfläche Licht sammelt und in den Lichtleiter einspeist. Je größer die Eintrittsfläche dieser Sammeloptik ist, aus um so größerer Entfernung kann bei gleicher Lichtintensität am Detektor gemessen werden. Konventionelle Linsen genügend hoher Brechkraft werden allerdings schnell sehr dick, unhandlich und teuer, wenn ihr Durchmesser 5 cm übersteigt.

Fresnellinsen hingegen sind selbst mit hoher Brechkraft sehr preiswert in Größen bis zu einem Meter Durchmesser herstellbar und kommerziell erhältlich. Bauartbedingt, nämlich dadurch, daß die lichtbrechende gekrümmte Eintrittsfläche in Stufen unterteilt und in eine Ebene verlagert ist, sind die Abbildungsfehler einer Fresnellinse deutlich größer als die einer konventionellen Linse. Deshalb werden Fresnellinsen nicht zu Abbildungszwecken benutzt, sondern lediglich zur Lichtsammlung eingesetzt, zum Beispiel in Solaranlagen oder als Kondensor in Tageslichtprojektoren.

Für die Sammlung von Licht aus sehr weit entfernten Quellen, zum Beispiel in der Astronomie oder der Militärtechnik, werden Teleskopkonstruktionen mit Hohlspiegeln eingesetzt, die aber teuer und außerdem zum Einkoppeln in dünne Lichtleiter schlecht geeignet sind.

Insbesondere bei der sortenreinen Trennung verschiedener Gegenstände oder Stoffe gibt es Probleme, so ist es für das Recycling erforderlich, die verschiedensten Materialien sortenrein zur Verfügung zu stellen. Besondere Probleme treten dabei bei den verschiedenen Kunststoffen auf, die mit den bekannten Möglichkeiten bisher nicht zweifelsfrei sortenrein getrennt werden können. Üblicherweise sind die Kunststoffgegenstände entsprechend dem verwendeten Kunststoff gekennzeichnet und werden mit großem Aufwand manuell getrennt. Bei der Sortierung von unsortiertem Abfall herrschen Arbeitsbedingungen, die den Beschäftigten durch verunreinigte Verpackungen oft kaum zuzumuten sind. Ebenfalls ist es nachteilig, daß beim manuellen Sortieren eine bestimmte Geschwindigkeit nicht überschritten werden kann und so die Kapazität begrenzt bleibt.

Ein weiteres Problem kann sich daraus ergeben, daß ein relativ großflächiger Bereich überwacht werden muß, der mit einem Meßwertaufnehmer nicht ausreichend überwacht werden kann. Die Ankopplung mehrerer Lichtleiter an ein spektrometrisches Analysegerät ist seit einigen Jahren Praxis. Hierbei ist jedoch die Verwendung eines zweidimensionalen Multi-Elementdetektors als lichtsensitives Element erforderlich. Dabei werden die verschiedenen Lichtleiter in einer Reihe parallel zum Eingangsspalt des Spektrometers angeordnet. Dadurch erfolgt die Aufspaltung in verschiedene Wellenlängen auf dem Detektor in Richtung der ersten Dimension, wobei in der zweiten Dimension die Bilder der verschiedenen Lichtleiter nebeneinander angeordnet sind. Die Abbildung der einzelnen durch die Lichtleiter geführten Lichtstrahlen auf den Detektor findet hierbei gleichzeitig statt. Es wird in diesem Fall von paralleler Spektroskopie gesprochen.

Eine weitere bekannte Möglichkeit, Licht aus verschiedenen optischen Kanälen in ein einziges Spektrometer einzukoppeln, ist die zeitlich nacheinander erfolgende Abbildung der einzelnen Kanäle. Für einen solchen Fall kann ein eindimensionaler Multi-Elementdetektor (Detektorzeile) verwendet werden. Hierbei ist jedoch einen Vorrichtung zur Umschaltung der einzelnen optischen Kanäle erforderlich.

Bisher bekannte optische Multiplexer verbinden unter Ausnutzung physikalischer Effekte durch optisches Mischen der einzelnen Kanäle unter Verwendung der Schmelzkopplung oder durch mechanisches Verschieben die gewünschten Kanäle. Hierbei treten jedoch hohe Verlustleistungen aufgrund der schlechten Tastverhältnisse bzw. ineffizienter optischer Ankopplung auf. Ein weiterer Nachteil bei den bekannten Multiplexern sind die relativ hohen Schaltzeiten.

US-A-4 784 275 betrifft eine Vorrichtung zum Erkennen und Trennen von Kapseln, wobei Licht einer Lichtquelle auf die am Lichtstrahl vorbeibewegten Kapseln gerichtet wird. Das von den Kapseln reflektierte Licht wird in mindestens einen Lichtleiter eingekoppelt und von diesem auf ein spektroskopisches Analysegerät gerichtet und die Meßsignale dieses Gerätes werden einer Auswerte- und Steuereinheit zugeführt. Aufgrund der Meßsignale wird die Farbe und die Länge der Kapseln bestimmt und falls die Werte nicht mit vorgegebenen übereinstimmen, wird die Kapsel ausgestoßen. Aus der DE 39 26 641 ist eine Vorrichtung zum maschinellen Separieren von Kunststoffolien aus einer Abfallmenge bekannt, die auf einem Transportband an einer Tastköpfe enthaltenden faseroptischen Farberkennungseinrichtung vorbeigeführt wird, wobei die Tastköpfe sequentiell ansteuerbar sind. Die Informationen der Tastköpfe wird einer Steuereinrichtung zugeführt, durch die Abräumorgane zur Trennung angesteuert werden. GB 2 211 931 A beschreibt eine Vorrichtung zum Sortieren von Diamanten, bei der das von den Diamanten reflektierte Licht über eine Mehrzahl von Lichtleitern auf einen Photomultiplier übertragen wird.

Eine mit einem Loch versehene drehende Scheibe tastet die Enden des Lichtleiterbündels ab. Aus der EP 0 552 819 A2 ist gleichfalls eine Vorrichtung zum Sortieren von Diamanten bekannt, bei der die Abbildungsoptik eine Fresnel- und eine Sammellinse aufweist.

Es ist Aufgabe der vorliegenden Erfindung, eine Vorrichtung zum Erkennen, Sortieren und/oder Trennen verschiedener Stoffe bzw. von Gegenständen aus verschiedenen Materialien zu schaffen, die sicher arbeitet, einfach aufgebaut ist und in der Lage ist, eine hohe Geschwindigkeit einzuhalten.

Diese Aufgabe wird erfindungsgemäß durch die im kennzeichnenden Teil des Anspruchs 1 angegebenen Merkmale gelöst. Vorteilhafte Weiterbildungen der Erfindung ergeben sich aus den untergeordneten Ansprüchen.

Bei der erfindungsgemäßen Lösung werden Stoffe oder Gegenstände in einem Strom durch einen Lichtstrahl einer Lichtquelle bewegt und das von den Stoffen oder Gegenständen reflektierte, transmittierte Licht oder das Fluoreszenz- oder Ramanstreulicht in mindestens einen Lichtleiter eingekoppelt, in dem das Licht in ein spektroskopisches Analysegerät geleitet wird und die vom spektroskopischen Analysegerät erfaßten Meßsignale einer Auswerte- und Steuereinheit zugeführt werden. Die Auswerte- und Steuereinheit ist dabei so ausgeführt, daß sie in der Lage ist, entsprechende Elemente anzusteuern bzw. zu aktivieren und mit Hilfe dieser Elemente eine Trennung oder Sortierung vorzunehmen. Solche Elemente können beispielsweise mechanisch betätigte Arme, schwenkbare Hebel, pneumatische Düsen oder bei Stoffen, die pulverförmig, flüssig oder gasförmig sind, Ventile sein. Die erfindungsgemäße Vorrichtung eignet sich insbesondere bei der Sortierung von normal anfallendem Abfall, dessen Einzelbestandteile in verschiedene wiederverwertbare Bestandteile und nicht mehr nutzbare Bestandteile getrennt werden sollen. Bei den relativ geometrisch großflächigen Strömen mit zu trennenden bzw. sortierenden Stoffen oder Gegenständen oder eine Erhöhung der Geschwindigkeit bzw. Meßwertauflösung sind für eine bessere Ausnutzung bzw. das Erfordernis der Verwendung nur eines spektrometrischen Analysegerätes mehrere Lichtleitfasern gleichzeitig an das spektrometrische Analysegerät angeschlossen. Auf diese Weise kann die Kapazität des Spektrometers optimal genutzt werden. Dabei wird dem am spektrometrischen Analysegerät in schneller Folge nacheinander bzw. alternierend Licht aus mehreren Lichtleitfasern zugeführt und anschließend die vom Analysegerät erfaßten Meßsignale entsprechend der Folge in einer Auswerte- und Steuereinheit ausgewertet und entsprechende Steuersignale erzeugt, die für die Trennung und/oder Sortierung genutzt werden können. Dabei verbindet der Lichtleiterumschalter jeden Eingangskanal eines Lichtleitkabels durch eine geeignete Abbildungsoptik (zum Beispiel Spiegel oder Linsen) mit jeweils genau einem Ausgangskanal. Das zeitliche Aus- und Einschalten geschieht durch eine geeignete mechanische oder jede beliebige andere Vorrichtung, die geeignet ist, den Lichtweg zu unterbrechen. Dabei werden dann alle bis auf einen der angeschlossenen Lichtleitfasern blockiert. Es koppelt nur noch das Licht des gewünschten Eingangskanals in den entsprechenden Ausgangskanal und wird auf das spektrometrische Analysegerät gerichtet, obwohl an allen Eingangskanälen Lichtsignale anliegen, die jedoch bis auf den einen freigegebenen gesperrt sind. Das permanente Zusammenführen, der auf oben beschriebene Weise ein- und ausgeschalteten Lichtsignale, kann auf mannigfaltige Weise, wie zum Beispiel mittels Gittern oder Schmelzkopplern erfolgen.

Das Zusammenführen der Lichtleiter geschieht am spektrometrischen Analysegerät, wie das ähnlich bereits in der parallelen Spetroskopie praktiziert wird, am Eingangsport eines als spektrometrisches Analysegerät verwendeten Spektrometers entlang einer geraden Linie, in nebeneinander angeordneter Form. Im Gegensatz zur parallelen Spektroskopie ist es bei dieser Lösung neu, die Ausrichtung der einzelnen Kanäle parallel zur Richtung der Wellenlängenselektion vorzunehmen. Dadurch überlagern sich sämtliche Spektren der freigegebenen optischen Kanäle auf der Detektorzeile. Im Normalfall wird dies jedoch nur ein einziger Kanal sein, und dessen Spektrum wird ausgewertet. Würden alle Kanäle gleichzeitig freigegeben sein, könnte keine eindeutige Information über die Wellenlängen des eingestrahlten Lichtes gewonnen werden. Wird dagegen nur ein einziger optischer Kanal am Spektrometereingang freigegeben, kann das Spektrum des allein durch diesen Kanal (Lichtleitfaser) geführten Lichtes erfaßt werden.

Die Verwendung des Lichtleiterumschalters erlaubt eine optimale Ausnutzung der Kapazität des verwendeten spektrometrischen Analysegerätes, bei dem bevorzugt eine Detektorzeile als lichtsensitives Element verwendet wird. Dies gilt, wenn zeitlich nacheinander oder im Wechsel das Licht verschiedener Lichtleiter spektral analysiert werden kann und dadurch die Anzahl der kostenintensiven spektrometrischen Analysegeräte auf eins reduziert werden kann.

In der Auswerte- und Steuereinheit müssen dann die Meßsignale entsprechend der durch den Lichtleiterumschalter erzeugten Sequenz ausgewertet werden, um die Elemente, die die Trennung bzw. Sortierung letztendlich durchführen, auch lokal definiert aktivieren zu können.

Bei der erfindungsgemäßen Vorrichtung ist im Strahlengang des Lichts eine Abbildungsoptik mit mindestens einer Fresnellinse vorgesehen. Die Abbildungsoptik kann auch mehrere Linsen wie z.B. eine aufweisen Sammellinse oder einen Teleskop, wobei die Fresnellinse den zu erkennenden Gegenständen bzw. Stoffen nächstliegend angeordnet ist.

Vorzugsweise sind der Durchmesser und die Brennweite der Abbildungsoptik so eingestellt, daß ihre Apertur gleich der des Lichtleiters ist, wodurch eine optimale Lichtausbeute erzielt wird.

Weiterhin ist es vorteilhaft, die Abstände der Linsen untereinander und gegenüber dem Lichtleiter so einzustellen, daß nur Licht aus einem vorbestimmten kegelförmigen Volumen im Bereich zwischen der Probe und der Fresnellinse in den Lichtleiter eingekoppelt wird.

Diese Einstellungen lassen sich dadurch einfach erreichen, daß man den Lichtweg umkehrt, d.h. am spektrometerseitigen Ende des Lichtleiters Licht einspeist und dieses Licht mit den Linsen wie gewünscht in das Zielgebiet abbildet, wobei zu beachten ist, daß alle benutzten Linsen möglichst vollständig ausgeleuchtet werden.

Die Erfindung wird im Folgenden anhand von in den Figuren dargestellten Ausführungsbeispielen näher erläutert. Es zeigen:

Fig. 1 eine schematische Darstellung der Sammeloptik,

Fig. 2 eine schematische Darstellung zum Messen der Reflexion,

Fig. 3 eine schematische Darstellung zum Messen der Transmission,

Fig. 4 eine schematische Darstellung zum Messen der Ramanstreuung;

Fig. 5 ein konkretes Ausführungsbeispiel der Sammeloptik;

Fig. 6 eine geschnittene Seitendarstellung eines Lichtumleiterschalters;

Fig. 7 ein Chopperrad für einen Lichtleiterumschalter;

Fig. 8a-c Möglichkeiten für die Lichteinkopplung im Lichtumleiterschalter, und

Fig. 9 eine schematische Darstellung eines als spektrometrisches Analysegerät verwendeten Gitterspektrometers mit mehreren parallelen Eingängen.

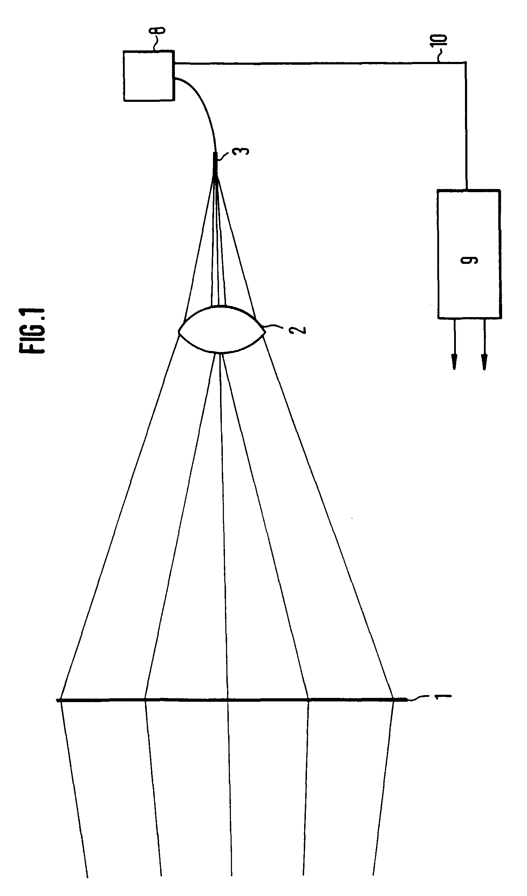

Fig. 1 zeigt den Strahlengang des Lichts in der aus einer Fresnellinse 1 und einer konventionellen bikonvexen Linse 2 hoher Brechkraft bestehenden Sammeloptik. Das von dem in Fig. 1 nicht gezeigten Gegenstand von links auf die Fresnellinse 1 fallende Licht wird von dieser zur Linse 2 und von dieser wiederum in die Öffnung eines Lichtleiters 3 und durch diesen zu einem als spektrometrischen Analysegerät dienenden Spektrometer 8 geleitet. Der Verlauf der Strahlen ist derart, daß die beiden Linsen 1 und 2 sowie die Öffnung des Lichtleiters 3 möglichst vollständig ausgeleuchtet werden. Zu diesem Zweck werden die Größen der Linsen 1 und 2 und die Abstände zwischen diesen untereinander und gegenüber dem Lichtleiter 3 entsprechend ausgewählt. Da die Fresnellinse 1 eine Sammelwirkung hat, kann die Linse 2 relativ klein ausgebildet sein.

Die Meßsignale des Spektrometers 8 werden über die Signalleitung 10 der Auswerte- und Steuereinheit 9 zugeführt. In der Auswerte- und Steuereinheit 9 erfolgt die Auswertung dahingehend, daß festgestellt wird, um welchen Stoff bzw. aus welchem Material der Gegenstand besteht, der durch den Strahlengang des Lichtes bewegt wird. Dabei wird ein Soll-Ist-Wertvergleich mit stoff-/materialspezifischen Vorgabewerten durchgeführt. Nachdem festgestellt wurde, um welchen Stoff bzw. welches Material es sich handelt, werden Signale über die schematisch mit Pfeilen dargestellten Ausgänge der Auswerte- und Steuereinheit 9 an Elemente gegeben, die die eigentliche Trennung oder Sortierung des Stromes, der durch den Strahlengang bewegt wird, durchführen.

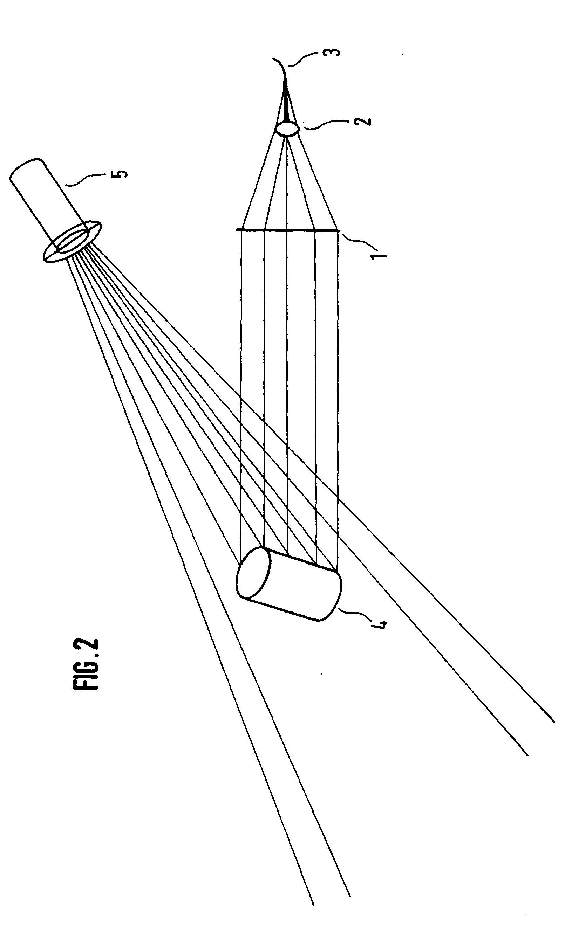

Fig. 2 stellt schematisch eine Vorrichtung zum Messen der Reflexion an einem Gegenstand 4 dar. Dieser wird mit dem Licht einer geeigneten Lichtquelle 5, beispielsweise einer Halogen-Glühlampe, angestrahlt, und das von ihm reflektierte Licht wird von der aus der Fresnellinse 1 und der bikonvexen Linse 2 bestehenden Sammeloptik in den Lichtleiter 3 eingekoppelt. Die Sammeloptik und die Lichtquelle 5 befinden sich hier auf der gleichen Seite des Gegenstandes 4.

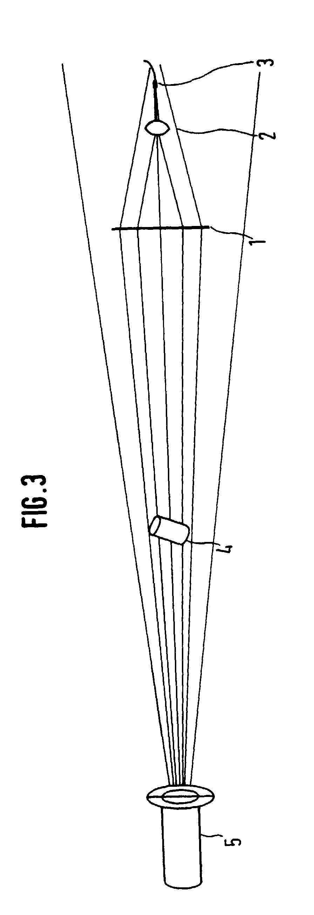

Fig. 3 gibt die Ausbildung einer Vorrichtung zum Messen der Transmission eines Gegenstandes 4 aus größerer Entfernung wieder. Durch geeignete Einstellung der Abstände der Fresnellinse 1 und der bikonvexen Linse 2 untereinander sowie zum Gegenstand 4 und zum Lichtleiter 3 läßt sich der Flächenbereich, aus dem das Licht in den Lichtleiter 3 eingekoppelt wird, so wählen, daß er kleiner wird als die senkrecht zur optischen Achse liegende Fläche des Gegenstandes 4. Hierdurch ist es möglich, mit Hilfe der auf der gegenüberliegenden Seite des Gegenstandes 4 aufgestellten Lichtquelle 5 nur das den Gegenstand 4 durchdringende Licht zu registrieren, ohne in seiner Nähe aufwendige Blendensysteme installieren zu müssen, die das den Gegenstand 4 seitlich passierende Licht vom Lichtleiter 3 fernhalten.

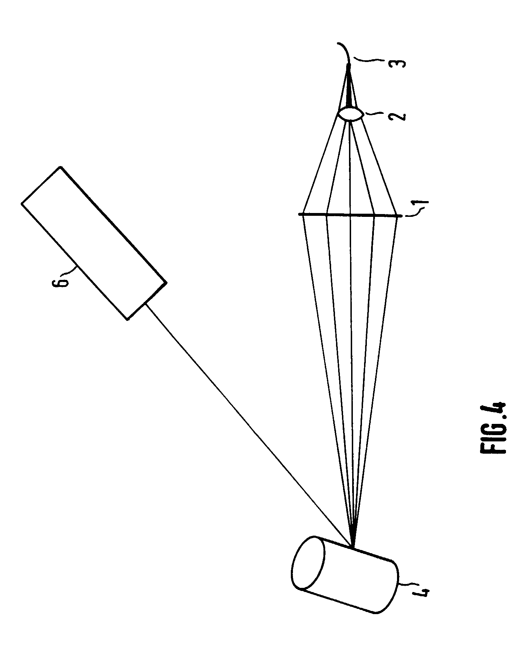

Bei der in Fig. 4 dargestellten Vorrichtung zur Ramanspektroskopie wird der Gegenstand 4 mit dem schmalbandigen Licht eines Lasers 6 beleuchtet. Die gesuchte Information ist in der breitbandigen Rückstreuung des Gegenstandes 4 enthalten, die über die Fresnellinse 1 und die bikonvexe Linse 2 in den Lichtleiter 3 eingekoppelt wird. Da diese Rückstreuung sehr schwach ist, ist bei dieser Messung eine hohe Sammeleffizienz der Einkoppeloptik unverzichtbar.

Bei einer Fluoreszenzmessung ist der Aufbau der Vorrichtung fast identisch mit dem in Fig. 2 gezeigten für die Messung der diffusen Reflexion. Die Anregungslichtquelle kann jedoch auch schmalbandig sein, zum Beispiel kann sie aus einer Gasentladungslampe oder einem Laser bestehen.

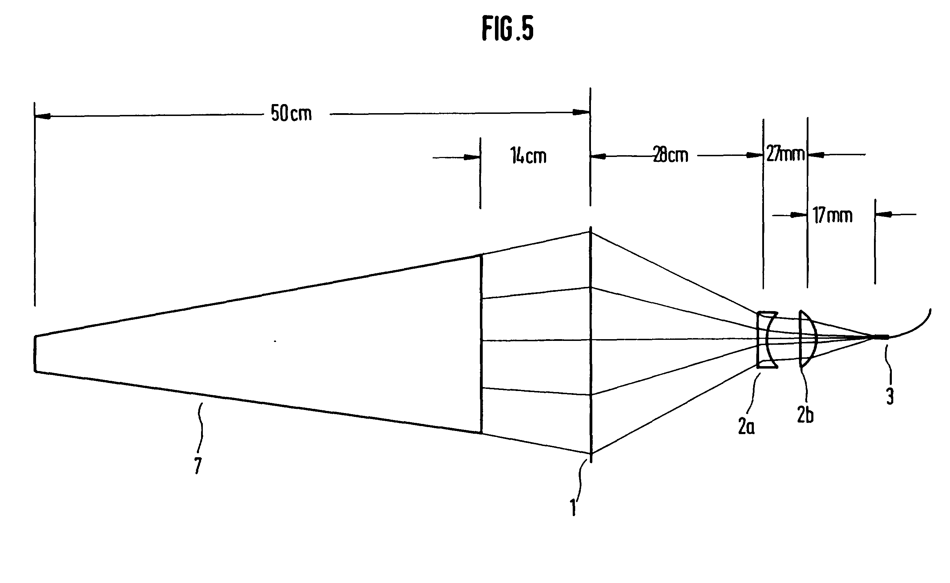

Fig. 5 zeigt die konkrete Ausbildung einer Vorrichtung, die zum großflächigen Abtasten von auf einem Fließband vorbeilaufenden Kunststoffkörpern, die sortiert werden sollen, eingesetzt wurde. Das Licht aus dem Abtastvolumen, d.h. einem Kegel 7 mit 15 cm Durchmesser in 14 cm Entfernung von der Fresnellinse 1 und von 5 cm Durchmesser in 50 cm Entfernung, wird in der Fresnellinse 1 mit einer Brennweite f = 25 cm vorgebündelt und von einem Teleskop aus einer plankonvexen Quarzlinse 2b (f = 25 mm) und einer plankonkaven Linse 2a (f = 40 mm) in den Lichtleiter 3 (200 μm Durchmesser und numerische Apertur 0,35) eingekoppelt. Die Abstände zwischen der Fresnellinse 1 und der Linse 2a, zwischen den Linsen 2a und 2b sowie zwischen der Linse 2b und dem Lichtleiter 3 betragen 28 cm, 27 mm und 17 mm.

Bei den in den Figuren 2 bis 5 dargestellten Vorrichtungen wurde auf die Aufnahme von Spektrometer 8 und Auswerte- und Steuereinheit 9 verzichtet.

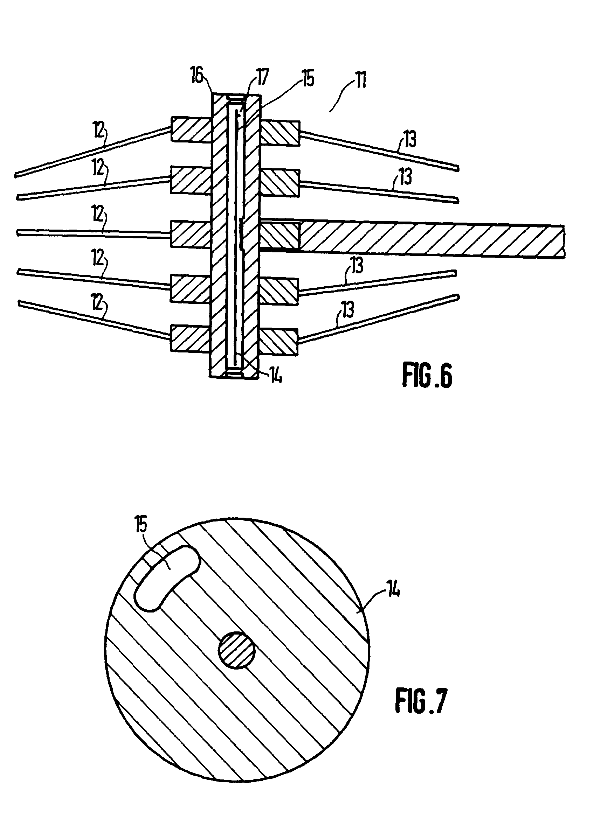

Insbesondere dann, wenn relativ große Flächen überwacht werden müssen, ist es zweckmäßig, mehrere Meßkanäle parallel so anzuordnen, daß die gesamte Breite beispielsweise eines bisher nicht in den Figuren dargestellten Förderbandes überwacht werden kann. Dabei wird das von dem Stoffstrom oder den Gegenständen reflektierte, transmittierte Licht, das fluoreszierende Licht und/oder Ramanstreulicht in mehrere lokal zuzuordnende Lichtleiter 12 eingekoppelt und durch diese zu einem in der Figur 6 dargestellten Lichtleiterumschalter 11 gesendet. Der erfindungsgemäß verwendete Lichtleiterumschalter 11 verfügt dabei über mehrere optische Kanäle, bei dem dargestellten Beispiel sind es 8. Diese sind kreisförmig angeordnet und können reihum an- und ausgeschaltet werden. Dabei ist zu jedem Zeitpunkt immer nur ein optischer Kanal geöffnet, und die anderen sind vollständig geschlossen. Das zu messende Licht gelangt durch die Lichtleitfasern 12 zum Lichtleiterumschalter 11 und wird von diesem, für den Fall, daß der jeweilige Kanal freigegeben wird, über die Lichtleiter 13 dem Spektrometer 8, das in dieser Darstellung weggelassen worden ist, zugeführt. Dabei werden die Lichtleiter 13 parallel am Gitterspektrometer 8 eingekoppelt. Die optische Einkopplung kann je nach dem zu überbrückenden Zwischenraum zwischen den Lichtleitern 12 und 13 mit oder ohne Linsen erfolgen. Bei dem für das Ausführungsbeispiel gewählten Beispiel für einen Lichtleiterumschalter 11 werden in zwei kreisrunden Platten 16 und 17 in regelmäßigen Abständen die Lichtleiter 12 und 13 aufgenommen und in dem bereits erwähnten Abstand voneinander gehalten. Im Spalt zwischen den Lichtleitern 12 und 13, also auch zwischen den Platten 16 und 17, ist ein drehbares sogenanntes Chopperrad 14 angeordnet, das entsprechend dem Abstand der Lichtleiter 12 und 13 vom Mittelpunkt eine Öffnung aufweist, die so bemessen ist, daß jeweils nur Licht eines Lichtleiters 12 in einen Lichtleiter 13 gelangen kann. Alle anderen optischen Verbindungen zwischen den Lichtleitern 12 und 13 werden durch das Chopperrad 14 abgedeckt und so optisch geschlossen.

In der Figur 7 ist ein Chopperrad 14 mit einer langlochförmigen Öffnung 15 dargestellt. Anstelle der Öffnung 15 in dieser Ausbildung kann auch jede andere beliebige mögliche Form, wie beispielsweise auch Schlitze verwendet werden.

Der Lichtleiterumschalter 11 ist aber nicht auf diese Form beschränkt. Es können auch andere lichtundurchlässige Sperrelemente mit Öffnungen bzw. Fenstern anderweitig mechanisch bewegt werden. Sogar Flüssigkristallschichten u.a. optoelektronische Schalter sind dafür beispielsweise einsetzbar.

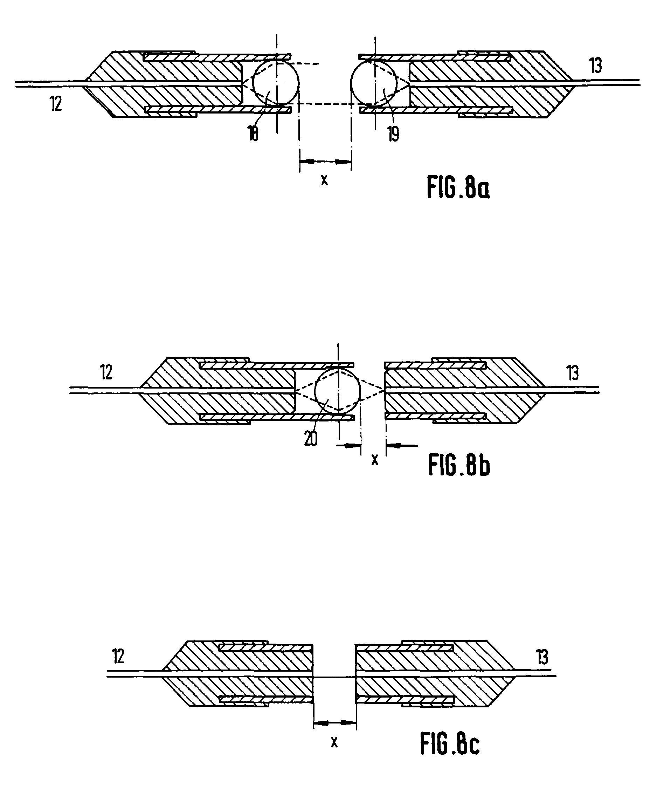

Die Figuren 8a bis 8c geben verschiedene Kopplungsarten der Lichtleiter 12 und 13 wieder. Dabei sind beide mit ihrer Austritts- und Eintrittsseite zueinander in einem Abstand angeordnet, der mit x gekennzeichnet ist. Das Chopperrad 14 ist in dem Abstand zwischen den Platten drehbar angeordnet. Bei dem in der Figur 8a dargestellten Beispiel sind sowohl am Lichtaustritt des Lichtleiters 12 als auch vor dem Lichteintritt des Lichtleiters 13 Linsen 18 und 19 vorhanden, um das Licht in besonders günstiger Form einzukoppeln.

Bei dem Beispiel nach der Figur 8b ist lediglich eine Linse 18 vorhanden, die das Licht aus dem Lichtaustritt des Lichtleiters 12 auf den Lichtleitereingang des Lichtleiters 13 fokussiert. Im Beispiel nach Figur 8c ist auf die Verwendung einer Linse zur Einkopplung verzichtet worden. Der Abstand x kann bei dem Beispiel nach Figur 8a relativ beliebig gewählt werden. Im Gegensatz dazu sollte er bei dem Beispiel, das in der Figur 8b dargestellt ist, einen Betrag von $x = 2 * f - R/2$ haben und für das Beispiel nach der Figur 8c so klein wie möglich gehalten werden, um die Einkoppelverluste geringzuhalten.

Da der Umfang des Chopperrades 14 im Verhältnis zum Durchmesser der optischen Abbildung der Lichtleiter 12 und 13 in der Chopperradebene groß gewählt werden kann, ergibt sich ein ausgesprochen günstiges Tastverhältnis. Die Öffnung 15 im Chopperrad 14 kann so groß gewählt werden, daß die Verschlußzeit (ca. 1 ms) beim Umschalten von einem Kanal zum nächsten klein gegenüber der Zeit ist, während der der Lichtweg zwischen einem Lichtleiterpaar 12 und 13 freigegeben ist. Ein so ausgebildeter Lichtleiterumschalter zeichnet sich durch eine hohe Meßgeschwindigkeit aus. Der Verlust an Licht wird nur durch die optische Kopplung zwischen den Lichtleiterpaaren 12 und 13 und die Schaltzeiten des Chopperrades 14 bestimmt. Dabei sind die letztgenannten bei geeigneter Dimensionierung des Chopperrades 14 vernachlässigbar klein.

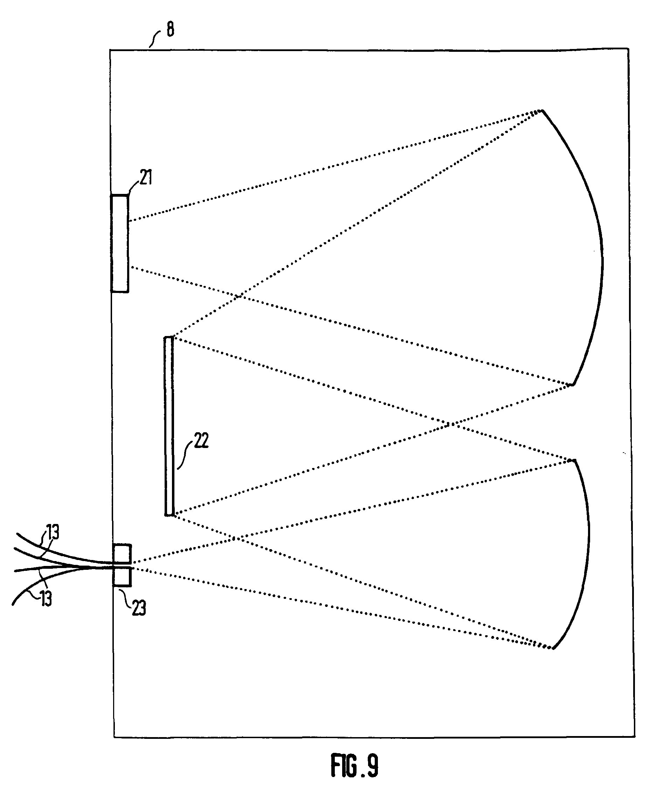

Die Figur 9 gibt das für die Auswertung erforderliche Gitterspektrometer 8 wieder, an dessen Eingängen die vom Lichtleiterumschalter 11 kommenden Lichtleiter 13 ankommen und nebeneinander parallel in das Gitterspektrometer 8 eingekoppelt werden. Die Ausrichtung ihrer gedachten Verbindungslinie erfolgt senkrecht zu den Linien des optischen Gitters 22. Mit der beschriebenen Anordnung unter Verwendung des Lichtleiterumschalters 11 wird das Licht jedes der Lichtleiter 13 einzeln spektral zerlegt und auf die Detektorzeile 21 abgebildet.

Würden alle Eingangskanäle mit monochromatischem Licht derselben Wellenlänge betrieben und alle gleichzeitig durchgeschaltet, lägen die Bilder jedes der Lichtleiter 13 am Eingangsport 23 des Gitterspektrometers 8 nebeneinander auf der Detektorzeile 21. Würde Licht mit verschiedenen Wellenlängen durch die Lichtleiter 13 gelangen und wären mehrere von ihnen gleichzeitig freigegeben, so würden sich ihre Spektren auf der Detektorzeile 21 überlagern. Dabei wären die Spektren bezüglich der Wellenlängenskala gegeneinander verschoben. Eine Analyse der Spektren des Lichtes der einzelnen optischen Kanäle ist dann offensichtlich nicht möglich. Bei der Freigabe nur eines der Lichtleiter 13 wird das Spektrum des von ihm geführten Lichtes auf die Detektorzeile 21 abgebildet, und es kann gemessen werden, als ob am Eingangsport 23 des Gitterspektrometers 8 nur ein einzelner Lichtleiter 13 vorhanden wäre.

Durch Vornahme einer eigenen Wellenlängeneichung für jeden einzelnen Kanal der Lichtleiter 13 oder der Verschiebung der Spektren zu einem geeichten Referenzkanal kann die räumliche Verschiebung der Spektren der einzelnen Lichtleiter 13 relativ zueinander beim Auslesen der Detektorzeile 21 berücksichtigt werden.

Die Abstände zwischen den verschiedenen Lichtleitern 13 am Eingangsport 23 des Gitterspektrometers 8 können dabei gleich oder auch verschieden sein. Zur Vereinfachung der Auswertung werden Abstände gewählt, die gewährleisten, daß die Spektren der einzelnen den verschiedenen Kanälen zuzuordnenden Abbildungen der Kanäle um ganzzahlige Pixelabstände auf der Detektorzeile 21 verschoben sind.

Vorteilhaft ist es ebenfalls, vor das Ende eines jeden Lichtleiters 13 eine Spaltmaske (optischer Eingangsspalt am Spektrometer) mit gleichen oder auch verschiedenen Spaltbreiten für die einzelnen Lichtleiter 13 anzubringen.

Ein vollständiges zweidimensionales Faserarray kann am Eingangsport 23 des Gitterspektrometers 8 angeschlossen werden, wenn ein zweidimensionaler Detektor anstelle der bereits beschriebenen Detektorzeile 21 verwendet wird. Im Ausführungsbeispiel nach Figur 6 könnte n * 8 Kanäle in das Spektrometer 8 eingekoppelt werden.

Als optische Kanäle werden zwar bevorzugt, wie bei dem Ausführungsbeispiel genannt, Lichtleiterfasern verwendet. Es könnten aber auch jede andere zur Lichtführung geeignete Vorrichtungen oder Elemente benutzt werden.

**Patentansprüche**

1. Vorrichtung zum Erkennen, Sortieren und/oder Trennen verschiedener Stoffe bzw. von Gegenständen aus verschiedenen Materialien, wobei Licht einer Lichtquelle auf die am Lichtstrahl vorbeibewegten Stoffe und/oder Gegenstände gerichtet ist, das von den Stoffen und/oder Gegenständen reflektierte, transmittierte oder das Fluoreszenz- oder Ramanstreulicht in mindestens einen Lichtleiter (3) eingekoppelt wird und von diesem auf ein spektroskopisches Analysegerät (8) gerichtet wird, wobei im Strahlengang des Lichts zwischen den Stoffen und/oder Gegenständen und dem mindestens einen Lichtleiter (3, 12) eine Abbildungsoptik vorgesehen ist und wobei Meßsignale des spektroskopischen Analysegerätes einer Auswerte- und Steuereinheit zugeführt werden, **dadurch gekennzeichnet,** daß mehrere Lichtleiter (12) vorgesehen sind, in die von den Stoffen und/oder Gegenständen reflektiertes, transmittiertes oder Fluoreszenz- oder Ramanstreulicht eingekoppelt wird und denen ein Lichtleiterumschalter (11) sowie weitere mit dem Analysegerät verbundene Lichtleiter (13) zugeordnet sind, daß der Lichtleiterumschalter (11) das aus den Lichtleitern (12) auf das spektroskopische Analysegerät (8) weiterzuleitende Licht sequentiell durchläßt oder sperrt, wobei der Lichtleiterumschalter (11) ein rotierendes Chopperrad (14) aufweist, das mit einer Öffnung (15) ausgebildet ist und jeweils einen Kanal zugeordneter Lichtleiter (12, 13) bei Drehung freigibt, wobei die weiteren Lichtleiter (13) am Eingang (23) des spektrometrischen Analysegerätes (8) parallel zur Richtung der Wellenlängenselektion angeordnet sind.

2. Vorrichtung nach Anspruch 1, dadurch gekennzeichnet, daß der Abstand der Lichtleiter (13) am Eingangsport (23) des spektrometrischen Analysegerätes (8) so groß ist, daß die Spektren der einzelnen Abbildungen auf einer Detektorzeile (21) des spektrometrischen Analysegerätes (8) um ganzzahlige Pixelabstände versetzt sind.

3. Vorrichtung nach Anspruch 1 oder 2, dadurch gekennzeichnet, daß die aus mindestens einer Linse bestehende Abbildungsoptik im Strahlengang des Lichts zwischen den Stoffen bzw. Gegenständen (4) und dem jeweiligen Lichtleiter (3, 12) eine Fresnellinse (1) aufweist.

4. Vorrichtung nach einem der Ansprüche 1 bis 3, dadurch gekennzeichnet, daß der Durchmesser und die Brennweite der Abbildungsoptik so eingestellt sind, daß ihre Apertur gleich der des Lichtleiters (3, 12) ist.

5. Vorrichtung nach einem der Ansprüche 1 bis 4, dadurch gekennzeichnet, daß die Abstände der Linsen (1, 2) untereinander und gegenüber dem Lichtleiter (3) so eingestellt sind, daß nur Licht aus einem vorbestimmten kegelförmigen Volumen (7) vor der Fresnellinse (1) in den Lichtleiter (3) einkoppelbar ist.

6. Vorrichtung nach einem der Ansprüche 1 bis 5, dadurch gekennzeichnet, daß die Abbildungsoptik ein Teleskop aufweist, das aus einer Sammellinse (2b) und einer Zerstreulinse (2a) besteht.

7. Vorrichtung nach einem der Ansprüche 1 bis 6, dadurch gekennzeichnet, daß von der Auswerte- und Steuereinheit (9) entsprechend den Meßsignalen des spektrometrischen Analysegerätes (8) stoff- bzw. materialspezifisch aktivierbare mechanische Elemente vorhanden sind.

8. Vorrichtung nach einem der Ansprüche 1 bis 6, dadurch gekennzeichnet, daß von der Auswerte- und Steuereinheit (9) entsprechend den Meßsignalen des spektrometrischen Analysegerätes (8) stoff- bzw. materialspezifisch aktivierbare Düsen entlang dem Transportband angeordnet sind.

**Claims**

1. Device for recognising, sorting and/or separating different substances or objects made from different materials, in which light from a light source is directed on to the substances and/or objects which are moved past the light beam; the light reflected or transmitted from the substances and/or objects, or the fluorescent or Raman scattered light, is input to at least one fibre optic light guide (3), and from there is transmitted to a spectroscopic analysis apparatus (8); a projection lens system is positioned in the beam path of the light between the substances and/or objects and at least one light guide (3, 12); and measurement signals from the spectroscopic analysis apparatus are passed to an evaluation and control unit,
in which

several light guides (12) are provided, into which is input the light reflected or transmitted from the substances and/or objects or the fluorescent or Raman scattered light, and to which are assigned a light guide two-way switch (11) and further light guides (13) which are connected to the analysis apparatus, and in which the light guide two-way switch (11) sequentially admits or blocks the light being transmitted from the light guides (12) to the spectroscopic analysis apparatus (8), the light guide two-way switch (11) having a rotating chopper wheel (14) which contains an opening (15) and which opens, as it rotates, a single channel of light guides (12, 13), the remaining light guides (13) at the entry (23) to the spectrometric analysis apparatus (8) being arranged parallel to the direction of wavelength selection.

2. Device as in Claim 1, in which the space between the light guides (13) and the entry port (23) of the spectrometric analysis apparatus (8) is such that the spectra of the individual projections are displaced on a sensor line (21) of the spectrometric analysis apparatus (8) at intervals of integral pixels.

3. Device as in Claim 1 or 2, in which the projection lens system - consisting of at least one lens - has a Fresnel lens (1) in the light path between the substances and/or objects (4) and the relevant light guide (3, 12).

4. Device as in one of Claims 1 to 3, in which the diameter and focal distance of the projection lens system are set so that their aperture is the same as that of the light guide (3, 12).

5. Device as in one of Claims 1 to 4, in which the distances between the lenses (1, 2) themselves and between the lenses and the light guide (13) are set so that only light from a predetermined conical volume (7) in front of the Fresnel lens (1) can be input into the light guide (3).

6. Device as in one of Claims 1 to 5, in which the projection lens system has a telescope which consists of a converging lens (2b) and a dispersing lens (2a).

7. Device as in one of Claims 1 to 6, in which there are present substance- and material-specific mechanical elements which can be activated by the evaluation and control unit (9) in accordance with the measurement signals from the spectrometric analysis apparatus (8).

8. Device as in one of Claims 1 to 6, in which substance- and material-specific nozzles are arranged along the conveyor belt which can be activated by evaluation and control unit (9) in accordance with the measurement signals from the spectrometric analysis apparatus (8).

**Revendications**

1. Dispositif pour identifier, trier et/ou séparer différentes substances ou des objets réalisés en différents matériaux, dans lequel la lumière d'une source de lumière est dirigée sur les substances et/ou les objets, qui se déplacent devant un faisceau de lumière, la lumière réfléchie par les substances et/ou les objets, la lumière transmise ou la lumière de la fluorescence ou la lumière de dispersion Raman est injectée dans au moins un guide de lumière (3) et est dirigée, par ce dernier, sur un appareil d'analyse spectroscopique (8), et dans lequel un système optique de formation d'images est prévu dans le trajet du rayonnement de la lumière entre les substances et/ou les objets et le au moins un guide de lumière (3,12), et dans lequel des signaux de mesure de l'appareil d'analyse spectroscopique sont envoyés à l'unité d'exploitation et de commande, caractérisé en ce qu'on prévoit plusieurs guides de lumière (12), dans lesquels la lumière réfléchie par les substances et/ou les objets, la lumière transmise ou la lumière de fluorescence ou la lumière de dispersion Raman est injectée et auxquels sont associés un commutateur (11) de guide de lumière ainsi que d'autres guides de lumière (13) reliés à l'appareil d'analyse, que le commutateur (11) des guides de lumière transmet séquentiellement ou bloque la lumière transmise depuis les guides de lumière (12) vers l'appareil d'analyse spectroscopique (8), le commutateur (11) des guides de lumière possédant une roue rotative de hachage (14), qui comporte une ouverture (15) et libère respectivement un canal de guides de lumière associés (12,13) lors de la rotation, les autres guides de lumière (13) à l'entrée (23) de l'appareil d'analyse spectrométrique (8) étant disposés parallèlement à la direction de la sélection des longueurs d'onde.

2. Dispositif selon la revendication 1, caractérisé en ce que la distance des guides de lumière (13) au niveau du port d'entrée (23) de l'appareil d'analyse spectrométrique (8) est suffisamment importante pour que les spectres des images individuelles formées sur une ligne de détection (21) de l'appareil d'analyse spectrométrique (8) soient décalés d'un multiple entier de la distance entre pixels.

3. Dispositif selon la revendication 1 ou 2, caractérisé en ce que le système optique de formation d'images constitué par au moins une lentille comporte une lentille de Fresnel (1) disposée dans le trajet du rayonnement de la lumière entre les substances ou objets (4) et le guide de lumière respectif (3,12).

4. Dispositif selon l'une des revendications 1 à 3, caractérisé en ce que le diamètre et la distance focale du système de formation d'images sont réglés de manière que leur ouverture est égale à celle du guide de lumière (3,12).

5. Dispositif selon l'une des revendications 1 à 4, caractérisé en ce que les distances des lentilles (1,2) entre elles et par rapport au guide de lumière (3) sont réglées de telle sorte que seule la lumière provenant d'un volume prédéterminé de forme conique (7) en avant de la lentille de Fresnel (1) peut être injectée dans le guide de lumière (3).

6. Dispositif selon l'une des revendications 1 à 5, caractérisé en ce que le système optique de formation d'images comprend une lunette, qui est constituée par une lentille convergente (2b) et une lentille divergente (2a).

7. Dispositif selon l'une des revendications 1 à 6, caractérisé en ce qu'il est prévu des éléments mécaniques pouvant être activés selon la substance ou le matériau par l'unité d'exploitation et de commande (9) en fonction des signaux de mesure de l'appareil d'analyse spectrométrique (8).

8. Dispositif selon l'une des revendications 1 à 6, caractérisé en ce que des buses pouvant être activées selon la substance ou le matériau par l'unité d'exploitation et de commande (9) en fonction des signaux de mesure de l'appareil d'analyse spectrométrique (8) sont disposées le long de la bande de transport.

FIG.1

EP 0 767 709 B1

FIG.2

FIG.3

EP 0 767 709 B1

FIG.4

EP 0 767 709 B1

FIG.5

FIG.6

FIG.7

**FIG.8a**

**FIG.8b**

**FIG.8c**

FIG.9